(19) **Europäisches Patentamt / European Patent Office / Office européen des brevets**

(11) **EP 2 262 036 B1**

(12) **FASCICULE DE BREVET EUROPEEN**

(45) Date de publication et mention
de la délivrance du brevet:
**21.03.2012 Bulletin 2012/12**

(51) Int Cl.:
*H01M 2/10* (2006.01)     *H01M 10/052* (2010.01)
*H01M 10/0585* (2010.01)     *H01M 2/04* (2006.01)

(21) Numéro de dépôt: **10354025.8**

(22) Date de dépôt: **28.05.2010**

(54) **Dispositif d' encapsulation flexible d'une micro-batterie**

Vorrichtung zur flexiblen Einkapselung einer Mikrobatterie

Device for flexible encapsulation of a micro-battery

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **09.06.2009 FR 0902784**

(43) Date de publication de la demande:
**15.12.2010 Bulletin 2010/50**

(73) Titulaire: **Commissariat à l'Énergie Atomique
et aux Énergies Alternatives
75015 Paris (FR)**

(72) Inventeurs:
• **Martin, Steve
38160 Saint-Sauveur (FR)**
• **Bedjaoui, Messaoud
38130 Echirolles (FR)**
• **Poulet, Sylvain
38110 Saint Victor de Cessieu (FR)**
• **Salot, Raphaël
38250 Lans-en-Vercors (FR)**

(74) Mandataire: **de Jong, Jean Jacques et al
Cabinet Hecké
10, rue d'Arménie
Europole
BP 1537
38025 Grenoble Cedex 1 (FR)**

(56) Documents cités:
**EP-A1- 2 071 657     FR-A1- 2 831 327
FR-A1- 2 861 218     FR-A1- 2 862 436**

## Description

### Domaine technique de l'invention

L'invention concerne un dispositif d'encapsulation d'une micro-batterie disposée sur une face d'un support souple, ayant un module d'Young $E_{sub}$ et une épaisseur $t_{sub}$, le dispositif comprenant au moins une couche mince constituant une barrière de protection et recouvrant l'ensemble de la micro-batterie et ladite face du support à la périphérie de la micro-batterie.

L'invention concerne également un procédé de réalisation d'un tel dispositif.

### État de la technique

Les micro-batteries au lithium sont généralement constituées de deux électrodes (positive et négative) séparées par un électrolyte. Une telle micro-batterie comprend, de plus, des collecteurs de courant métalliques, en platine ou tungstène, par exemple. L'électrode positive est en un matériau ayant une bonne conductivité ionique, TiOS par exemple. L'électrolyte est un isolant électrique avec une forte conductivité ionique tel que le LiPON. L'électrode négative est constituée, par exemple, de lithium métallique. Les matériaux contenant du lithium étant très sensibles à l'air, et en particulier à l'oxygène, l'azote et l'humidité, ils doivent être recouverts d'une barrière de protection inerte et étanche. La maîtrise de l'encapsulation est un facteur primordial qui conditionne l'efficacité dans le temps des micro-batteries.

Une première solution d'encapsulation consiste à coller un capot, généralement en verre et d'une épaisseur de 1 mm environ, sur le composant. Ce dispositif d'encapsulation présente l'avantage de réduire considérablement la diffusion des espèces vers le composant. En revanche, le capot est épais par rapport à l'épaisseur de la batterie et non flexible. Pour de nombreuses applications comme les étiquettes RFID (« Radio Frequency Identification ») ou les capteurs intégrés dans les pneumatiques, il est nécessaire de conserver une flexibilité importante de l'ensemble micro-batterie/dispositif d'encapsulation.

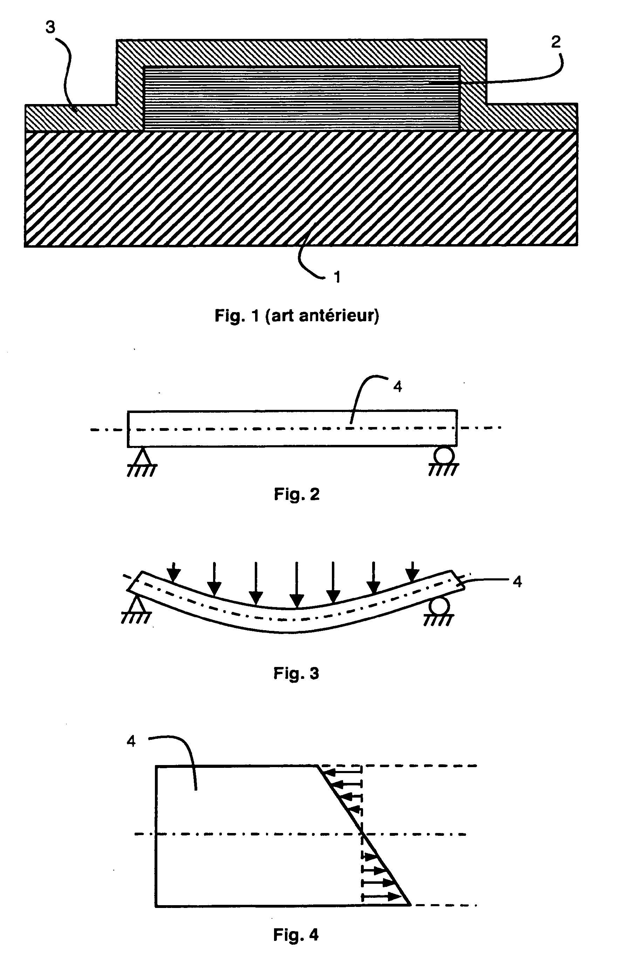

La solution technique couramment utilisée consiste à déposer sur la micro-batterie un dispositif d'encapsulation comprenant au moins une couche mince, constituant une barrière de protection. La figure 1 représente, sur un support souple 1 constitué d'un substrat, une micro-batterie 2, recouverte d'une telle barrière de protection 3. L'épaisseur de ces dispositifs d'encapsulation par dépôt de couches minces n'excède pas $50\,\mu m$. En effet, au-delà, les techniques de dépôt employées ne sont plus adaptées et les contraintes mécaniques internes au dispositif d'encapsulation conduisent à une perte de l'effet de barrière de diffusion.

Les matériaux polymères possèdent des propriétés mécaniques intéressantes pour la réalisation de dispositifs d'encapsulation flexibles. Cependant, ils ne présentent pas de propriétés suffisantes pour éviter la diffusion des espèces qui réagissent avec le lithium. Ils sont donc toujours associés à au moins une couche de matériau dense, de type céramique ou métallique.

Le brevet US5,561,004 décrit un dispositif d'encapsulation pour des batteries à couches minces au lithium. Le dispositif d'encapsulation comprend une première couche, de type polymère, déposée sur la micro-batterie. Le polymère est, par exemple, du parylène. Cette première couche vise, d'une part, à limiter les défauts liés à la rugosité du substrat, et d'autre part, à permettre l'accommodation des déformations du composant lors de son utilisation. Le dispositif comprend obligatoirement une deuxième couche formant une barrière de protection. Cette barrière de protection est constituée, par exemple, d'une couche en matériau céramique ou en matériau métallique. Elle peut être composée d'une superposition de couches céramiques et métalliques pour une efficacité accrue. Grâce à sa faible épaisseur (quelques microns) et à la nature des matériaux polymères, ce dispositif présente une flexibilité supérieure aux capots en verre. Cependant, leur domaine de flexion reste limité. En effet, pour de trop fortes contraintes en flexion, il apparaît dans le dispositif d'encapsulation à couches minces des microfissures entraînant une diminution de la protection.

Les figures 2 et 3 représentent respectivement une structure 4 unidimensionnelle au repos et en flexion. La figure 4 représente schématiquement les contraintes mécaniques dans une telle structure en flexion. La déformation de la structure 4 engendrée par la flexion impose une réduction de la surface supérieure et une augmentation de la surface inférieure, ou inversement suivant le sens de l'effort de flexion. La structure subit donc des contraintes en compression dans une première partie (supérieure sur la figure 4) et des contraintes en tension dans une seconde partie (inférieure sur la figure 4). Au milieu de la structure 4, les contraintes en compression et en tension se compensent, créant un plan neutre, c'est-à-dire une zone (illustrée par le trait en pointillé mixte) où les contraintes sont nulles.

Le brevet FR2831327 décrit un dispositif d'encapsulation d'une micro-batterie comprenant une couche de protection et un capot.

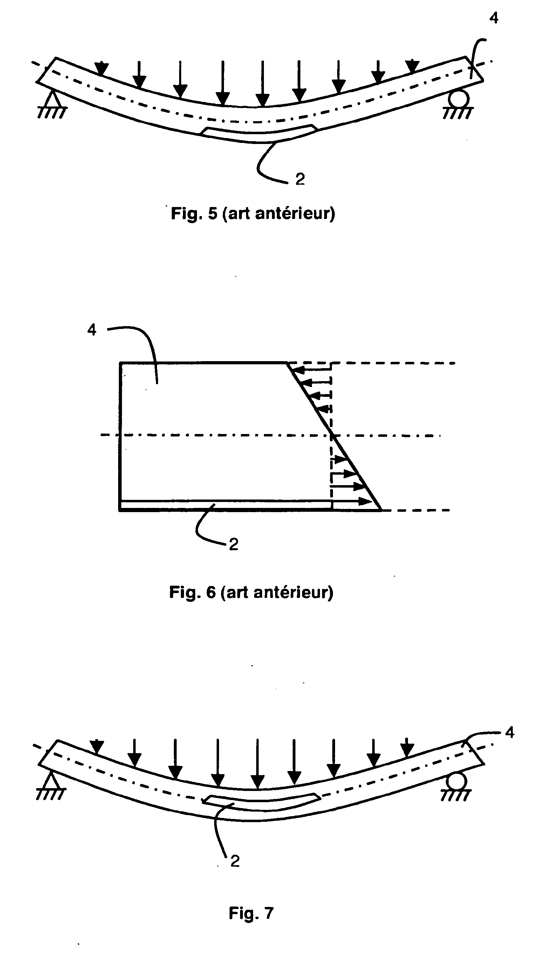

De manière classique, les micro-batteries sont déposées sur un substrat, servant de support mécanique. Le substrat a généralement une épaisseur comprise entre $100\,\mu m$ et quelques millimètres alors que la micro-batterie a généralement une épaisseur comprise entre 5 et $10\,\mu m$. Comme illustré sur les figures 5 et 6, une micro-batterie 2 qui se situe sur une face de la structure 4, par exemple un substrat, se trouve donc dans une zone de contrainte très forte.

Des microfissures risquent donc d'apparaître dans le dispositif d'encapsulation (non représenté sur les figures 5 et 6).

**Objet de l'invention**

L'invention a pour but un dispositif d'encapsulation d'une micro-batterie remédiant aux inconvénients de l'art antérieur. Plus particulièrement, l'invention a pour but un dispositif flexible, facile à réaliser tout en évitant l'apparition de microfissures responsables d'une diminution de la protection lors d'un effort en flexion.
Selon l'invention, ce but est atteint par le fait que le dispositif d'encapsulation d'une micro-batterie disposée sur une face d'un support souple, ayant un module d'Young $E_{sub}$ et une épaisseur $t_{sub}$, comprend au moins une couche mince constituant une barrière de protection et recouvrant l'ensemble de la micro-batterie et ladite face du support à la périphérie de la micro-batteriele, et par le fait que le dispositif comporte un couvercle flexible de compensation, disposé sur la barrière de protection et en un matériau ayant un module d'Young $E_{comp}$ et une épaisseur $t_{comp}$ choisis pour satisfaire, avec une précision de $\pm$ 30%, l'équation

$$t_{comp} = \frac{t_{sub}}{\sqrt{\eta}},$$

dans laquelle

$$\eta = \frac{E_{comp}}{E_{sub}}.$$

L'invention a également pour but un procédé de réalisation d'un tel dispositif.
Le procédé comporte la formation de la micro-batterie sur le support, la formation de la barrière de protection et la formation du couvercle flexible ayant un module d'Young $E_{comp}$ et une épaisseur $t_{comp}$ choisis pour satisfaire, avec une précision de $\pm$ 30%, l'équation

$$t_{comp} = \frac{t_{sub}}{\sqrt{\eta}},$$

dans laquelle

$$\eta = \frac{E_{comp}}{E_{sub}}.$$

**Description sommaire des dessins**

D'autres avantages et caractéristiques ressortiront plus clairement de la description qui va suivre de modes particuliers de réalisation de l'invention donnés à titre d'exemples non limitatifs et représentés aux dessins annexés, dans lesquels :

- la figure 1 représente un dispositif d'encapsulation d'une micro-batterie selon l'art antérieur.
- les figures 2 et 3 représentent schématiquement une structure, respectivement au repos et soumis à un effort de flexion.

- la figure 4 représente schématiquement les contraintes mécaniques dans la structure selon la figure 3.
- la figure 5 représente une structure en flexion comprenant une micro-batterie selon l'art antérieur.
- la figure 6 représente schématiquement les contraintes dans la structure selon la figure 5.
- la figure 7 représente une structure en flexion comprenant une micro-batterie, selon l'invention.
- la figure 8 représente schématiquement les contraintes dans la structure selon la figure 7.
- la figure 9 représente un dispositif d'encapsulation d'une micro-batterie selon l'invention.
- les figures 10 et 11 représentent respectivement une structure composite et une structure non composite équivalente.
- la figure 12 représente la position du plan neutre de la structure selon la figure 10, en fonction de l'épaisseur du couvercle.
- la figure 13 représente un mode particulier de réalisation du dispositif selon l'invention.

**Description de modes particuliers de réalisation**

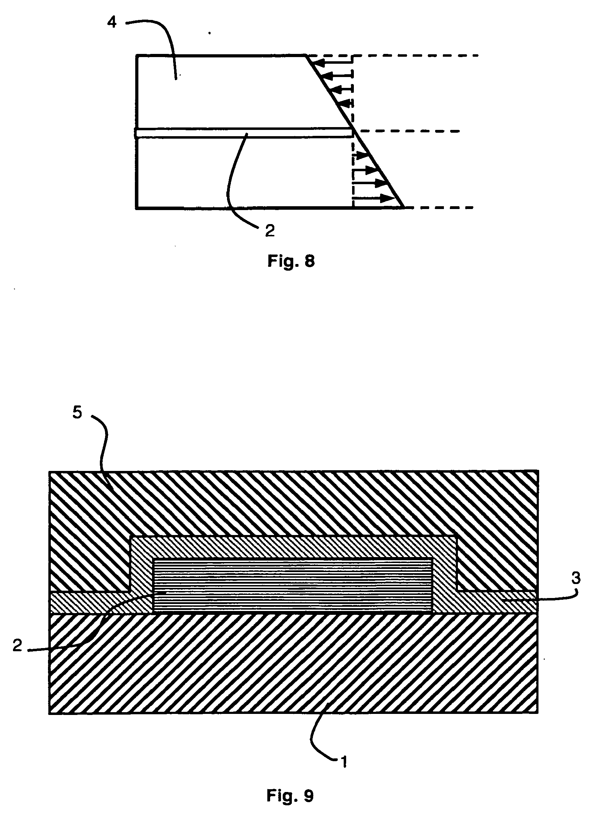

Dans le mode de réalisation préférentiel de la figure 7, la batterie 2, recouverte de la barrière de protection (non représentée), est placée au plus près du plan neutre (représenté par le trait pointillé mixte) de la structure 4. Dans cette zone, appelée plan neutre ou fibre neutre, les contraintes mécaniques lors d'une flexion sont minimales (Fig.8) et la barrière conserve son intégrité. Une telle configuration est représentée sur la figure 9. Le dispositif d'encapsulation de la micro-batterie 2, disposée sur une face du support souple 1, comprend au moins une couche mince constituant la barrière de protection 3 et un couvercle 5 flexible de compensation. La barrière 3 recouverte du couvercle 5 est disposée sur la micro-batterie 2 et sur le support 1 à la périphérie de la micro-batterie.

Le couvercle 5 de compensation est réalisé dans un matériau dont l'épaisseur et le module d'Young sont choisis pour qu'il ait des propriétés mécaniques équivalentes à celui du support 1. L'épaisseur et le module d'Young du couvercle sont choisis de manière à situer la micro-batterie, disposée sur le support souple, au plus près du plan neutre de cette structure composite support/micro-batterie/couvercle. Le couvercle 5 ne constitue pas, à lui seul, une couche protectrice contre la diffusion des espèces. Il est donc toujours associé à au moins une couche mince formant une barrière de protection 3, placée au plus près de la micro-batterie. La barrière de protection est généralement constituée par une couche diélectrique ou métallique, ou par un système multicouche polymère/métal ou polymère/diélectrique.

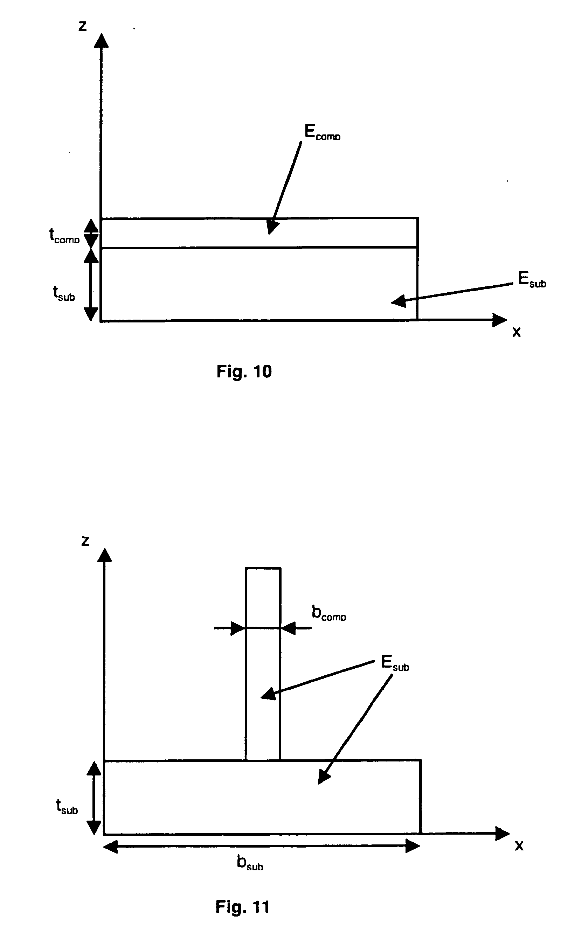

La figure 10 représente une structure composite, c'est-à-dire composée d'une couche d'un premier matériau et d'une couche d'un second matériau, différent du premier matériau. La couche supérieure correspond, par exemple, au couvercle de compensation 5, ayant une épaisseur $t_{comp}$ et un module d'Young $E_{comp}$. La couche inférieure correspond, par exemple, au support souple, ayant une épaisseur $t_{sub}$ et un module d'Young $E_{sub}$, différent de $E_{comp}$. En prenant l'une des couches comme matériau de référence, les autres couches peuvent être assimilées à des couches du même matériau que la couche de référence, mais dont la largeur est proportionnelle au rapport des modules d'Young. Par exemple, sur la figure 11, le support souple est choisi comme matériau de référence ($E_{sub}$ et $t_{sub}$). La largeur équivalente $b_{comp}$ du couvercle de compensation dans le même matériau ($E_{sub}$) est donnée par l'équation :

$$b_{comp} = b_{sub} \cdot \frac{E_{comp}}{E_{sub}} = b \cdot \eta \qquad \textbf{Eq. 1}$$

dans laquelle $\eta = \dfrac{E_{comp}}{E_{sub}}$ représente le rapport des modules d'Young des deux couches. La figure 11 représente donc une structure non composite équivalente à la structure représentée à la figure 10. A partir de cette structure non composite équivalente, le calcul de la position du plan neutre, ou fibre neutre, peut être réalisé. La position du plan neutre suivant l'axe z est donnée par l'équation suivante, pour un nombre n de couches :

$$S = \frac{\sum_{i=1}^{n} z_i A_i}{\sum_{i=1}^{n} A_i}$$  **Eq. 2**

$Z_i$ étant la coordonnée suivant z de la fibre neutre de chaque couche, c'est-à-dire le milieu de chaque couche, et $A_i$ étant la surface de la section de chaque couche dans le plan xz. A titre d'exemple, sur la figure 11, dans la couche inférieure $Z_i = t_{sub}/2$. Avec la structure de la figure 11, l'équation Eq. 2 peut se développer de la manière suivante :

$$S = \frac{\left(\dfrac{t_{sub}}{2}\right) \cdot t_{sub} \cdot b_{sub} + \left(t_{sub} + \dfrac{t_{comp}}{2}\right) \cdot t_{comp} \cdot b_{comp}}{t_{sub} \cdot b_{sub} + t_{comp} \cdot b_{comp}}$$  **Eq. 3**

La largueur équivalente $b_{comp}$ du couvercle de compensation, exprimée en fonction de la largeur du support $b_{sub}$ et du rapport des modules d'Young $\eta$ par l'équation Eq. 1, permet de simplifier cette équation :

$$S = \frac{1}{2} \cdot \frac{t_{sub}^{\,2} + 2\eta t_{comp} \cdot t_{sub} + \eta t_{comp}^{\,2}}{t_{sub} + \eta t_{comp}}$$  **Eq. 4**

Cette dernière équation permet de calculer la position suivant l'axe z du plan neutre, dans une structure support flexible/couvercle composée de matériaux aux modules d'Young différents.

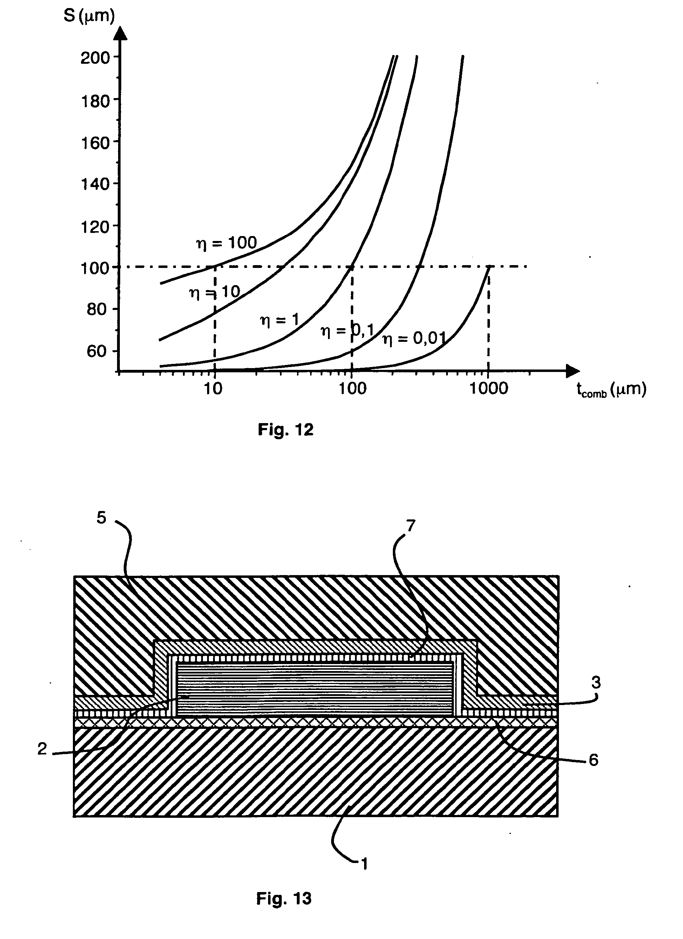

La figure 12 représente la position S en fonction de l'épaisseur du couvercle de compensation $t_{comp}$, pour une épaisseur du support $t_{sub}$ de 100$\mu$m et différentes valeurs de $\eta$. Les différentes courbes de la figure 12 montrent que le plan neutre de la structure ne se situe pas obligatoirement à l'interface du support et du couvercle de compensation, c'est-à-dire à 100$\mu$m. Il est donc nécessaire de choisir l'épaisseur du couvercle $t_{comp}$ et le module d'Young du couvercle $E_{comp}$, lié au matériau de celui-ci, afin de situer le plan neutre à l'interface entre le support et le couvercle. Dans ce cas, S est égal à l'épaisseur du support $t_{sub}$ et l'équation Eq. 4 peut se simplifier :

$$t_{comp} = \frac{t_{sub}}{\sqrt{\eta}}$$  **Eq. 5**

L'équation Eq. 5 permet donc de calculer l'épaisseur du couvercle $t_{comp}$ en fonction des modules d'Young et de l'épaisseur du support $t_{sub}$, pour que le plan neutre de cette structure se situe au niveau de la face supérieure du support. Dans ce cas, cette structure est dite équilibrée. Dans le cas d'une structure à trois couches, support/micro-batterie/couvercle par exemple, si le couple support/couvercle est équilibré, alors le plan neutre est situé dans la couche intermédiaire, la micro-batterie dans cet exemple. La micro-batterie, étant située au voisinage du plan neutre, elle subit peu de contraintes lors d'une flexion.

Par exemple sur la figure 12, pour $\eta = 0{,}01$ et une épaisseur de substrat de 100$\mu$m, un plan neutre situé à 100$\mu$m donne une épaisseur $t_{comb}$ du couvercle de 1000$\mu$m. Le matériau du couvercle ayant un module d'Young cent fois plus faible que celui du support, son épaisseur est dix fois plus importante que celle du support. Dans un autre exemple, pour η=100, l'épaisseur du couvercle $t_{comp}$ est de 10μm pour obtenir, de manière analogue, un plan neutre situé à 100μm.

L'épaisseur du couvercle de compensation est calculée à partir de l'équation Eq. 5 avec une précision de $\pm$ 30%. Dans un mode de réalisation préférentiel, la précision est de $\pm$10%. De plus, l'épaisseur du couvercle est, de préférence, au moins cinq fois supérieure à celle de la micro-batterie et de la barrière de protection, permettant ainsi de réduire le niveau de contrainte dans la micro-batterie.

Le dispositif d'encapsulation décrit ci-dessus devant être flexible, le matériau du couvercle est choisi, de préférence, parmi la famille des polymères. Le matériau du couvercle peut être choisi parmi la liste non exhaustive suivante, donnant également les modules d'Young associés (en MPa) :

| | |
|---|---|
| Polyméthacrylate de méthyle (PMMA) | 2300 - 3200 |
| Polyamide | 3000 à 5000 |
| Polycarbonate (PC) | 2300 |
| Polyéthylène (PE) | 200 à 700 |
| Polystyrène (PS) | 3000 à 3400 |
| Polychlorure de vinyle (PVC) | 3000 |
| Polyéthylène naphtalate (PEN) | 500-1500 |
| Polytétrafluoroéthylène (PTFE) | 750 |
| Polyfluorure de vinylidène (PVDF) | 350 - 1100 |
| Polypropylène (PP) | 1500 |
| Polyxylylène (PPX) | 2400-3200 |
| Silicone | 5 -500 |
| Polyimide | 3200 |
| Résine époxy | 3500 |

En pratique, le couvercle doit être intimement lié, en tout endroit, à la micro-batterie pour que l'équation Eq. 5 soit valide. Les techniques de dépôt du couvercle sur la micro-batterie et la barrière de protection sont plus particulièrement adaptées. Le dépôt chimique en phase vapeur (« Chemical Vapor Déposition », CVD), le dépôt à la tournette (« spin coating ») et le dépôt par jet d'encre peuvent être utilisés. D'autres techniques de collage ou laminage à chaud sont possibles. Par contre, les techniques de collage par cordon de colle périphérique sont inappropriées.

Dans le mode de réalisation particulier de la figure 13, le couvercle de compensation et le support sont formés dans le même matériau, en kapton par exemple. La micro-batterie 2 est déposée sur un substrat en kapton de 150μm d'épaisseur, servant de support 1 mécanique et recouvert d'une couche 6 de tungstène de 200nm d'épaisseur environ. La barrière de protection 3 est formée par l'empilement successif de cinq couches minces, par exemple alternativement d'oxyde de silicium ($SiO_2$) de 100nm d'épaisseur environ et de nitrure de silicium ($Si_3N_4$) de 50nm d'épaisseur environ. Cette barrière de protection 3 est déposée sur le couvercle 5, en kapton, de 150μm d'épaisseur. Le couvercle 5, recouvert de la barrière de protection, est ensuite fixé sur la micro-batterie et le support par collage. La colle est, par exemple, une résine époxy, représentée par la couche 7 sur la figure 13. La réticulation de la colle, permettant de solidariser le couvercle 5 à la micro-batterie 2 et au support 1, s'effectue, de préférence, par une exposition aux ultraviolets.

Dans une variante de réalisation, la micro-batterie est déposée sur un support en polyméthacrylate de méthyle (PMMA) de 50 μm d'épaisseur recouvert d'une couche de 100nm environ de nitrure de silicium. La barrière de protection, déposée directement sur la micro-batterie et son substrat, est composée par l'empilement d'une couche de parylène de 2μm d'épaisseur, réalisée par évaporation sous vide, et d'une couche de titane de 200nm d'épaisseur environ, réalisée par pulvérisation magnétron sous vide. Enfin, le couvercle de compensation est réalisé par dépôt à la tournette d'une résine époxy de 35μm, réticulée par 50 min d'exposition aux ultraviolets.

## Revendications

1. Dispositif d'encapsulation d'une micro-batterie (2) disposée sur une face d'un support souple (1), ayant un module d'Young $E_{sub}$ et une épaisseur $t_{sub}$, le dispositif comprenant au moins une couche mince constituant une barrière de protection (3) et recouvrant l'ensemble de la micro-batterie et ladite face du support à la périphérie de la micro-batterie, dispositif **caractérisé en ce qu'**il comporte un couvercle flexible de compensation (5), disposé sur la barrière de protection (3) et en un matériau ayant un module d'Young $E_{comp}$ et une épaisseur $t_{comp}$ choisis pour satisfaire, avec une précision de $\pm$ 30%, l'équation

$$t_{comp} = \frac{t_{sub}}{\sqrt{\eta}},$$

dans laquelle

$$\eta = \frac{E_{comp}}{E_{sub}}.$$

**2.** Dispositif selon la revendication 1, **caractérisé en ce que** la précision est de $\pm 10\%$.

**3.** Dispositif selon l'une des revendications 1 et 2, **caractérisé en ce que** le support (1) et le couvercle (5) sont formés dans un même matériau.

**4.** Dispositif selon l'une quelconque des revendications 1 à 3, **caractérisé en ce que** le matériau constituant le couvercle (5) est un polymère.

**5.** Dispositif selon l'une quelconque des revendications 1 à 4, **caractérisé en ce que** le couvercle (5) est au moins cinq fois plus épais que la micro-batterie (2).

**6.** Procédé de réalisation d'un dispositif selon l'une quelconque des revendications 1 à 5, **caractérisé en ce qu'**il comporte la formation de la micro-batterie (2) sur le support (1), la formation de la barrière de protection (3) et la formation du couvercle flexible (5), le couvercle flexible ayant un module d'Young $E_{comp}$ et une épaisseur $t_{comp}$ choisis pour satisfaire, avec une précision de $\pm 30\%$, l'équation

$$t_{comp} = \frac{t_{sub}}{\sqrt{\eta}},$$

dans laquelle

$$\eta = \frac{E_{comp}}{E_{sub}}.$$

**7.** Procédé selon la revendication 6, **caractérisé en ce qu'**il comporte successivement la formation de la barrière de protection (3) par dépôt de couches minces sur le couvercle (5) et la fixation par une colle du couvercle recouvert de la barrière sur le support (1) muni de la micro-batterie (2).

**8.** Procédé selon la revendication 7, **caractérisé en ce que** la colle est une résine époxy.

**9.** Procédé selon la revendication 6, **caractérisé en ce qu'**il comporte la formation du couvercle (5) par dépôt sur la barrière de protection (3) préalablement déposée sur la micro-batterie (2) et le support (1).

**10.** Procédé selon la revendication 9, **caractérisé en ce que** la formation du couvercle (5) est réalisée par dépôt à la tournette.

11. Procédé selon l'une quelconque des revendications 6 à 10, **caractérisé en ce que** le matériau constituant le couvercle (5) est une résine époxy.

**Claims**

1. Packaging device of a microbattery (2) arranged on a surface of a flexible support (1) having a Young's modulus $E_{sub}$ and a thickness $t_{sub}$, the device comprising at least one thin layer forming a protective barrier (3) and covering the microbattery fully and said surface of the flexible support at the periphery of the microbattery, device **characterized in that** it comprises a flexible compensation cover (5) arranged on the protective barrier (3) and made from a material having a Young's modulus $E_{comp}$ and a thickness $t_{comp}$ chosen to satisfy, with an accuracy of $\pm$ 30%, the equation

$$t_{comp} = \frac{t_{sub}}{\sqrt{\eta}},$$

in which

$$\eta = \frac{E_{comp}}{E_{sub}}.$$

2. Device according to claim 1, **characterized in that** the accuracy is $\pm 10\%$.

3. Device according to one of claims 1 and 2, **characterized in that** the support (1) and the cover (5) are formed from the same material.

4. Device according to any one of claims 1 to 3, **characterized in that** the material forming the cover (5) is a polymer.

5. Device according to any one of claims 1 to 4, **characterized in that** the cover (5) is at least five times thicker than the microbattery (2).

6. Method for producing a device according to any one of claims 1 to 5, **characterized in that** it comprises forming the microbattery (2) on the support (1), forming the protective barrier (3) and forming the flexible cover (5), the flexible cover having a Young's modulus $E_{comp}$ and a thickness $t_{comp}$ chosen to satisfy, with an accuracy of $\pm$ 30%, the equation

$$t_{comp} = \frac{t_{sub}}{\sqrt{\eta}},$$

in which

$$\eta = \frac{E_{comp}}{E_{sub}}.$$

7. Method according to claim 6, **characterized in that** it comprises successively forming the protective barrier (3) by deposition of thin layers on the cover (5) and fixing by an adhesive the cover covered by the barrier onto the support (1) equipped with the microbattery (2).

8. Method according to claim 7, **characterized in that** the adhesive is an epoxy resin.

9. Method according to claim 6, **characterized in that** it comprises forming the cover (5) by deposition on the protective barrier (3) previously deposited on the microbattery (2) and the support (1).

10. Method according to claim 9, **characterized in that** the step of forming the cover (5) is achieved by spin coating.

11. Method according to any one of claims 6 to 10, **characterized in that** the material forming the cover (5) is an epoxy resin.

**Patentansprüche**

1. Vorrichtung zur Einkapselung einer Mikrobatterie (2), die auf einer Fläche eines flexiblen Trägers (1) mit einem Elastizitätsmodul $E_{sub}$ und einer Dicke $t_{sub}$ angeordnet ist, wobei die Vorrichtung wenigstens eine dünne Schicht umfasst, welche eine Schutzbarriere (3) bildet und die gesamte Mikrobatterie sowie die Fläche des Trägers am Umfang der Mikrobatterie bedeckt, Vorrichtung, welche **dadurch gekennzeichnet ist, dass** sie einen flexiblen Ausgleichsdeckel (5) umfasst, der auf der Schutzbarriere (3) angeordnet ist und aus einem Material besteht, das einen Elastizitätsmodul $E_{comp}$ und eine Dicke $t_{comp}$ aufweist, die ausgewählt sind, um mit einer Genauigkeit von $\pm$ 30 % die Gleichung zu erfüllen

$$t_{comp} = \frac{t_{sub}}{\sqrt{\eta}},$$

worin

$$\eta = \frac{E_{comp}}{E_{sub}}.$$

2. Vorrichtung nach Anspruch 1, **dadurch gekennzeichnet, dass** die Genauigkeit $\pm$ 10 % beträgt.

3. Vorrichtung nach einem der Ansprüche 1 und 2, **dadurch gekennzeichnet, dass** der Träger (1) und der Deckel (5) aus einem gleichen Material ausgebildet sind.

4. Vorrichtung nach einem der Ansprüche 1 bis 3, **dadurch gekennzeichnet, dass** das Material, das den Deckel (5) bildet, ein Polymer ist.

5. Vorrichtung nach einem der Ansprüche 1 bis 4, **dadurch gekennzeichnet, dass** der Deckel (5) wenigstens fünfmal dicker als die Mikrobatterie (2) ist.

**6.** Verfahren zur Herstellung einer Vorrichtung nach einem der Ansprüche 1 bis 5, **dadurch gekennzeichnet, dass** es die Ausbildung der Mikrobatterie (2) auf dem Träger (1), die Ausbildung der Schutzbarriere (3) sowie die Ausbildung des flexiblen Deckels (5) umfasst, wobei der flexible Deckel einen Elastizitätsmodul $E_{comp}$ und eine Dicke $t_{comp}$ aufweist, die ausgewählt sind, um mit einer Genauigkeit von $\pm$ 30 % die Gleichung zu erfüllen

$$t_{comp} = \frac{t_{sub}}{\sqrt{\eta}},$$

worin

$$\eta = \frac{E_{comp}}{E_{sub}}.$$

**7.** Verfahren nach Anspruch 6, **dadurch gekennzeichnet, dass** es nacheinander die Ausbildung der Schutzbarriere (3) durch Abscheiden von dünnen Schichten auf dem Deckel (5) und das Befestigen des mit der Barriere überzogenen Deckels mittels eines Klebers an dem mit der Mikrobatterie (2) versehenen Träger (1) umfasst.

**8.** Verfahren nach Anspruch 7, **dadurch gekennzeichnet, dass** der Kleber ein Epoxidharz ist.

**9.** Verfahren nach Anspruch 6, **dadurch gekennzeichnet, dass** es die Ausbildung des Deckels (5) durch Abscheiden auf der zuvor auf der Mikrobatterie (2) und dem Träger (1) abgeschiedenen Schutzbarriere (3) umfasst.

**10.** Verfahren nach Anspruch 9, **dadurch gekennzeichnet, dass** die Ausbildung des Deckels (5) mittels Schleuderbeschichtung vollzogen wird.

**11.** Verfahren nach einem der Ansprüche 6 bis 10, **dadurch gekennzeichnet, dass** das Material, das den Deckel (5) bildet, ein Epoxidharz ist.

3

2

1

**Fig. 1 (art antérieur)**

4

**Fig. 2**

4

**Fig. 3**

4

**Fig. 4**

4

2

**Fig. 5 (art antérieur)**

4

2

**Fig. 6 (art antérieur)**

4

2

**Fig. 7**

**Fig. 8**

**Fig. 9**

**Fig. 10**

**Fig. 11**

**Fig. 12**

**Fig. 13**

**EP 2 262 036 B1**

**RÉFÉRENCES CITÉES DANS LA DESCRIPTION**

**Documents brevets cités dans la description**

- US 5561004 A
- FR 2831327